# EUROPEAN PATENT APPLICATION

(11) **EP 3 678 390 A1**
(43) Date of publication of application: **08.07.2020**
(21) Application number: 18857751.4
(22) Date of filing: 19.09.2018
(51) Int. Cl.: H04W 4/06

(54) **METHOD AND DEVICE FOR DATA TRANSMISSION**

(30) Priority: 21.09.2017 CN 201710861867
(71) Applicant: Huawei Technologies Co., Ltd., Longgang District Shenzhen, Guangdong 518129 (CN)
(72) Inventor: YANG, Yanmei, Shenzhen, Guangdong 518129 (CN)
(74) Representative: Pfenning, Meinig & Partner mbB
(86) International application number: PCT/CN2018/106463
(87) International publication number: WO 2019/057072

(57) **Abstract**

Embodiments of this application provide a data transmission method and apparatus. The method includes: receiving, by a multicast transmission control network element, a first non-access stratum message, where the first non-access stratum message includes reception quality indication information of data received by a terminal on a multicast transmission path; determining, by the multicast transmission control network element after receiving the reception quality indication information, to start a unicast transmission path; and sending, by the multicast transmission control network element, a first indication message to a user plane network element, where the first indication message is used to instruct to start a first unicast transmission path, and the first unicast transmission path is used to assist the multicast transmission path in transmitting data to the terminal. In the embodiments of this application, data reception quality indication information of the terminal may be obtained by using the non-access stratum message, the unicast transmission path is used to assist the multicast transmission path in transmitting the data to the terminal, and data transmission is performed in a dual-stream mode, thereby improving reporting efficiency of data reception quality, enhancing reliability of the data transmission, and improving efficiency of the data transmission.

## Description

This application claims priority to Chinese Patent Application No. 201710861867.X, filed with the Chinese Patent Office on September 21, 2017 and entitled "DATA TRANSMISSION METHOD AND APPARATUS", which is incorporated herein by reference in its entirety.

### TECHNICAL FIELD

This application relates to the field of communications technologies, and in particular, to a data transmission method and apparatus.

### BACKGROUND

A 3^{rd} generation partnership project (3^{rd} generation partnership project, 3GPP) multimedia broadcast multicast service (multimedia broadcast multicast service, MBMS) is a data transmission system that supports service data delivery performed by using an air interface and a broadcast mode. In a 3GPP MBMS data transmission system, an application server (application server) performs transmission control of service data of an operator network. In a working mode of transmission control of the service data, the application server is responsible for determining a delivery mode of third-party service data, including a multicast delivery mode, a unicast delivery mode, or the like of the service data. However, when the application server determines to deliver data in the multicast delivery mode, loss of a data packet may occur in a terminal of the third-party service data due to poor reception of a multicast air interface signal.

In the prior art, if a problem, such as loss of a data packet, occurs in a terminal, the terminal reports a reception status of service data to the application server by using an application layer protocol. If the terminal receives multicast data in an idle (idle) mode, when finding a problem such as poor reception of a multicast air interface signal, the terminal needs to switch from the idle mode to an active (active) mode before sending application layer signaling, to report the problem, such as the poor reception of a multicast control signal, to the application server. In a process that the terminal switch from the idle mode to the active mode, a switching latency still leads to loss of the data packet, and poor reliability and low applicability of data transmission.

### SUMMARY

Embodiments of this application provide a data transmission method and apparatus, so that reporting efficiency of feeding back, by a terminal, data reception quality on a multicast transmission path can be improved, thereby enhancing reliability of data transmission and improving efficiency of data transmission, leading to higher applicability.

According to a first aspect, a data transmission method is provided, and is applied to a multicast transmission control network element side. The method includes: receiving, by a multicast transmission control network element, a first non-access stratum message, where the first non-access stratum message includes reception quality indication information of data received by a terminal on a multicast transmission path. After receiving the reception quality indication information, the multicast transmission control network element determines to start a unicast transmission path, and further sends a first indication message to a user plane network element. The first indication message is used to instruct the user plane network element to start the unicast transmission path. It may be understood that for ease of description, the unicast transmission path herein may be described by using a first unicast transmission path as an example. Herein, the first unicast transmission path that the multicast transmission control network element instructs the user plane network element to start is used to assist the multicast transmission path in transmitting data to the terminal. Herein, that the unicast transmission path assists the multicast transmission path in data transmission means that while the multicast transmission path is used to send the data to the terminal, the unicast transmission path is also used to send the data to the terminal, and the data sent on the unicast transmission path to the terminal is the same as the data sent on the multicast transmission path to the terminal. The multicast transmission path is a primary transmission path. Only when reception quality of the data received by the terminal on the multicast transmission path cannot satisfy a service requirement of the terminal, the unicast transmission path is simultaneously started to send the data to the terminal, and the unicast transmission path is a secondary transmission path. Therefore, the unicast transmission path is referred to as a path for assisting the multicast transmission path in transmitting the data to the terminal.

In the embodiments of this application, the terminal may report, by using the non-access stratum message, the reception quality indication information of the data reception on the multicast transmission path, so that reporting efficiency of feeding back, by the terminal, data reception quality on a multicast transmission path can be improved. After receiving the reception quality indication information, the multicast transmission control network element may instruct the user plane network element to start the unicast transmission path to send the data to the terminal, so that it can be ensured that the terminal can receive the data on both the unicast transmission path and the multicast transmission path, thereby enhancing reliability of data transmission, improving efficiency of data transmission, and leading to higher applicability.

In a possible implementation, the first indication message includes first identification information of the first unicast transmission path and/or second identification information of the multicast transmission path. The first identification information and/or the second identification information are or is used to instruct the user plane network element to replicate data transmitted on the multicast transmission path to the first unicast transmission path for transmission. After receiving the indication message, the user plane network element may replicate data that is transmitted on the multicast transmission path identified by the second identification information to the first unicast transmission path identified by the first identification information, and send the data on the first unicast transmission path to the terminal, to implement a dual-stream mode in which the unicast transmission path and the multicast transmission path simultaneously send the data to the terminal, so that stability of receiving, by the terminal, the data can be ensured, thereby enhancing reliability of data transmission.

In a possible implementation, the multicast transmission path includes a multicast transmission bearer and/or a multicast transmission session; and the first unicast transmission path includes a unicast transmission bearer and/or a unicast transmission session. In the embodiments of this application, the multicast transmission path is a generalized expression, and a specific expression of the multicast transmission path may be determined based on an actual application scenario, so that operation is more flexible and more applicable.

In a possible implementation, before the receiving the first non-access stratum message, the multicast transmission control network element may first activate the multicast transmission path, and send identification information of the multicast transmission path to the access and mobility management network element. In the embodiments of this application, after activating the multicast transmission path, the multicast transmission control network element may send the data on the multicast transmission path to the terminal. The multicast transmission control network element may alternatively send the identification information of the multicast transmission path to the access and mobility management network element. The access and mobility management network element may store the identification information of the multicast transmission path, and may further forward the non-access stratum message to the multicast transmission control network element when receiving the non-access stratum message sent by the terminal, where the non-access stratum message is used to feed back a reception quality indication of multicast transmission on the multicast transmission path. The multicast transmission control network element sends the identification information of the multicast transmission path to the access and mobility management network element, so that subsequent forwarding efficiency of the non-access stratum message can be improved, and reliability of data transmission can further be better ensured.

In a possible implementation, in a case in which data reception quality on the multicast transmission path is improved, the terminal may alternatively report reception quality indication information to the access and mobility management network element by using another non-access stratum message. The access and mobility management network element forwards the non-access stratum message (for example, a second non-access stratum message) to the multicast transmission control network element. After receiving the second non-access stratum message, the multicast transmission control network element determines to cancel using the first unicast transmission path for data transmission, and sends a second indication message to the user plane network element. The second indication message is used to instruct the user plane network element to cancel replicating the data transmitted on the multicast transmission path to the first unicast transmission path for transmission. In the embodiments of this application, after learning that reception quality of the data received by the terminal on the multicast transmission path is improved, the multicast transmission control network element may instruct the user plane network element to cancel the dual-stream transmission mode in which the unicast transmission path and the multicast transmission path simultaneously send the data to the terminal, that is, cancel using the unicast transmission path to send the data to the terminal and still use the multicast transmission path to send the data to the terminal, thereby saving network resources occupied by sending the data to the terminal. The dual-stream transmission mode and a single-stream transmission mode may be switched based on data reception quality of the terminal, so that operation is more flexible and more applicable.

In a possible implementation, the multicast transmission control network element may send, to the terminal, a third indication message for instructing to start the first unicast transmission path that is used to assist the multicast transmission path in data transmission. The third indication message may be used to notify the terminal that the data transmitted on the first unicast transmission path is the same as the data transmitted on the multicast transmission path, so that the terminal may obtain data of higher quality based on the data transmitted on the first unicast transmission path and the multicast transmission path, and stability of receiving, by the terminal, the data is ensured.

According to a second aspect, a data transmission method is provided, and is applied to an access and mobility management network element side. The method includes: receiving, by an access and mobility management network element, a non-access stratum message of a terminal, where the non-access stratum message of the terminal includes reception quality indication information of data received by the terminal on a multicast transmission path; and sending, by the access and mobility management network element, a first non-access stratum message to a multicast transmission control network element, where the first non-access stratum message is used to feed back the reception quality indication information of the data received by the terminal on the transmission path to the multicast transmission control network element, and the first non-access stratum message includes the reception quality indication information of the data received by the terminal on the multicast transmission path. The first non-access stratum message may trigger the multicast transmission control network element to determine to start a first unicast transmission path, and instruct a user plane network element to start the first unicast transmission path. In the embodiments of this application, a reception quality indication of the data received by the terminal on the multicast transmission path may be transferred between the terminal and the access and mobility management network element or between the access and mobility management network element and the multicast transmission control network element by using the non-access stratum message, thereby improving efficiency of reporting, by the terminal, data reception quality, and further improving reliability of data transmission.

In a possible implementation, the non-access stratum message of the terminal includes identification information of the multicast transmission path. The access and mobility management network element determines the multicast transmission control network element based on the identification information of the multicast transmission path, and sends the first non-access stratum message to the multicast transmission control network element. The multicast transmission control network element is a network element that obtains the multicast transmission path through creation, and\or activation, and\or modification.

In a possible implementation, before receiving the non-access stratum message of the terminal, the access and mobility management network element may receive identification information of the multicast transmission path sent by the multicast transmission control network element, and obtain a mapping relationship between the identification information of the multicast transmission path and the multicast transmission control network element. After receiving the non-access stratum message of the terminal, the access and mobility management network element may determine, based on the identification information of the multicast transmission path carried in the non-access stratum message of the terminal and the mapping relationship, the multicast transmission control network element corresponding to the identification information of the multicast transmission path, and send the first non-access stratum message to the multicast transmission control network element. The multicast transmission control network element is a network element that obtains the multicast transmission path through creation, and\or activation, and\or modification.

In a possible implementation, the non-access stratum message of the terminal includes identification information of the multicast transmission path. After receiving the non-access stratum message of the terminal, the access and mobility management network element determines the multicast transmission control network element based on an identity of the multicast transmission control network element carried in the identification information of the multicast transmission path, and sends the first non-access stratum message to the multicast transmission control network element. The multicast transmission control network element is a network element that obtains the multicast transmission path through creation, and\or activation, and\or modification.

In the embodiments of this application, the access and mobility management network element may determine a forwarding object of the non-access stratum message of the terminal by using the foregoing three possible implementations. The forwarding object of the non-access stratum message may be determined in various manners, so that the operation of forwarding, by the access and mobility management network element, the non-access stratum message to the multicast transmission control network element is more flexible and more applicable.

In a possible implementation, the access and mobility management network element may send a second non-access stratum message to the multicast transmission control network element. The second non-access stratum message is a non-access stratum message that is sent when the reception quality of the data received by the terminal on the multicast transmission path is improved, and the non-access stratum message carries the reception quality indication information of the data received by the terminal on the multicast transmission path. The reception quality indication information in the second non-access stratum message may be used to trigger the multicast transmission control network element to determine to cancel using the first unicast transmission path for the data transmission, and instruct the user plane network element to cancel using the first unicast transmission path to send data to the terminal, so that network resources occupied by sending the data to the terminal are saved.

According to a third aspect, a data transmission method is provided, and is applied to a user plane network element side. The method includes: sending, by a user plane network element, data to a terminal on a multicast transmission path; determining, by the user plane network element, a first unicast transmission path when the user plane network element receives, from a multicast transmission control network element, first indication information used to instruct to start a unicast transmission path; replicating the data transmitted on the multicast transmission path to the first unicast transmission path; and sending the data on the first unicast transmission path to the terminal. In the embodiments of this application, the user plane network element may start, based on indication of the multicast transmission control network element, a dual-stream transmission mode in which the unicast transmission path and the multicast transmission path simultaneously send the data to the terminal, so that stability of receiving, by the terminal, the data may be improved, reliability of data transmission may be enhanced, and applicability is higher.

In a possible implementation, the first indication message includes first identification information of the first unicast transmission path and second identification information of the multicast transmission path. The user plane network element may determine, based on the first identification information, the first unicast transmission path, replicate data that is transmitted on the multicast transmission path identified by the second identification information to the first unicast transmission path, and send the data on the first unicast transmission path to the terminal. The method is simple to operate, and may further improve efficiency of sending the data to the terminal.

In a possible implementation, the first indication message includes activation information of the first unicast transmission path, first identification information of the first unicast transmission path, and second identification information of the multicast transmission path. The user plane network element may determine, based on the first identification information, the first unicast transmission path, activate the first unicast transmission path, replicate data that is transmitted on the multicast transmission path identified by the second identification information to the first unicast transmission path, and send the data on the first unicast transmission path to the terminal.

In a possible implementation, the first indication message includes creation information of the first unicast transmission path and second identification information of the multicast transmission path. The user plane network element may create the first unicast transmission path, replicate data that is transmitted on the multicast transmission path identified by the second identification information to the first unicast transmission path, and send the data on the first unicast transmission path to the terminal.

The embodiments of this application improve diversity of the implementation in which the user plane network element sends the data to the terminal by using the unicast transmission path, so that operation is more flexible and more applicable.

In a possible implementation, after receiving the second indication message from the multicast transmission control network element, the user plane network element cancels, based on the second indication message, replicating data transmitted on the multicast transmission path to the first unicast transmission path for transmission, so that network resources occupied by sending the data sent to the terminal can be saved while data reception quality of the terminal is ensured.

According to a fourth aspect, a data transmission method is provided, and is applied to a terminal side. The method includes: receiving, by a terminal, data sent by a user plane network element on a multicast transmission path; and sending, by the terminal, a first non-access stratum message to an access and mobility management network element when the terminal needs to feed back reception quality of the data received on the multicast transmission path to a core network. The first non-access stratum message includes reception quality indication information of the data received by the terminal on the multicast transmission path. The first non-access stratum message is used to trigger a multicast transmission control network element to determine to start a unicast transmission path for data transmission, and instruct the user plane network element to start the unicast transmission path to send the data to the terminal. The terminal receives indication information used to instruct to start a first unicast transmission path. After receiving the indication information, the terminal may learn that data that is the same as the data transmitted on the multicast transmission path is also transmitted on the first unicast transmission path. Therefore, the terminal may receive the data on the first unicast transmission path. That is, the terminal may receive data transmitted on the first unicast transmission path, where the data transmitted on the first unicast transmission path is the same as the data transmitted on the multicast transmission path. The terminal may simultaneously receive the data by using the first unicast transmission path and the multicast transmission path, so that stability and quality of data reception can be ensured, reliability of data reception of the terminal is enhanced, and applicability is higher.

In a possible implementation, before receiving the data, the terminal may receive reception indication information of multicast data from an access network apparatus, and the reception indication information includes identification information of the multicast transmission path and/or identification information of the multicast transmission control network element. After receiving the reception indication information, the terminal may monitor the data transmitted on the multicast transmission path. In this case, the terminal enters a preparation state for receiving the data, and may further receive the data transmitted on the multicast transmission path when the data arrives at the multicast transmission path.

In a possible implementation, after the user plane network element starts the unicast transmission path and the multicast transmission path to simultaneously send the data to the terminal, the terminal may send, after detecting that data reception quality on the multicast transmission path is improved, and the data does not need to be transmitted on the unicast transmission path, a second non-access stratum message to the access and mobility management network element. The reception quality indication information of the data transmitted on the multicast transmission path is carried in the second non-access stratum message, and the second non-access stratum message triggers, by using the reception quality indication information, to cancel using the first unicast transmission path for data transmission, so that network resources occupied by sending the data to the terminal can be saved.

In a possible implementation, the first non-access stratum message and/or the second non-access stratum message include or includes identification information of the multicast transmission path and/or identification information of the multicast transmission control network element.

According to a fifth aspect, a multicast transmission control network element is provided. The multicast transmission control network element includes a unit and/or a module configured to perform the data transmission method according to the first aspect and/or any one of the possible implementations of the first aspect described above, so that a beneficial effect (or an advantage) of the data transmission method according to the first aspect can also be achieved.

According to a sixth aspect, an access and mobility management network element is provided. The access and mobility management network element includes a unit and/or a module configured to perform the data transmission method according to the second aspect and/or any one of the possible implementations of the second aspect described above, so that a beneficial effect (or an advantage) of the data transmission method according to the second aspect can also be achieved.

According to a seventh aspect, a user plane network element is provided. The user plane network element includes a unit and/or a module configured to perform the data transmission method according to the third aspect and/or any one of the possible implementations of the third aspect described above, so that a beneficial effect

(or an advantage) of the data transmission method according to the third aspect can also be achieved.

According to an eighth aspect, a terminal is provided. The terminal includes a unit and/or a module configured to perform the data transmission method according to the fourth aspect and/or any one of the possible implementations of the fourth aspect described above, so that a beneficial effect (or an advantage) of the data transmission method according to the fourth aspect can also be achieved.

According to a ninth aspect, a multicast transmission control network element is provided. The multicast transmission control network element includes a memory, a processor, a receiver, and a transmitter. The processor is configured to invoke data transmission program code stored in the memory, to perform the data transmission method according to the foregoing first aspect and/or any one of the possible implementations of the first aspect.

According to a tenth aspect, an access and mobility management network element is provided. The access and mobility management network element includes a memory, a processor, a receiver, and a transmitter. The processor is configured to invoke data transmission program code stored in the memory, to perform the data transmission method according to the foregoing second aspect and/or any one of the possible implementations of the second aspect.

According to an eleventh aspect, a user plane network element is provided. The user plane network element includes a memory, a processor, a receiver, and a transmitter. The processor is configured to invoke data transmission program code stored in the memory, to perform the data transmission method according to the foregoing third aspect and/or any one of the possible implementations of the third aspect.

According to a twelfth aspect, a terminal is provided. The terminal includes a memory, a processor, a receiver, and a transmitter. The processor is configured to invoke data transmission program code stored in the memory, to perform the data transmission method according to the foregoing fourth aspect and/or any one of the possible implementations of the fourth aspect.

According to a thirteenth aspect, an embodiment of this application provides a communications system. The system includes the multicast transmission control network element according to the fifth aspect, the access and mobility management network element according to the sixth aspect, the user plane network element according to the seventh aspect, and the terminal according to the eighth aspect.

According to a fourteenth aspect, an embodiment of this application provides a computer storage medium, configured to store a computer software instruction that is used by the multicast transmission control network element in the data transmission method according to the foregoing first aspect. The instruction includes a program required by the multicast transmission control network element to perform a manner designed in the foregoing first aspect.

According to a fifteenth aspect, an embodiment of this application provides a computer storage medium, configured to store a computer software instruction that is used by the access and mobility management network element in the data transmission method according to the foregoing second aspect. The instruction includes a program required by the access and mobility management network element to perform a manner designed in the foregoing second aspect.

According to a sixteenth aspect, an embodiment of this application provides a computer storage medium, configured to store a computer software instruction that is used by the user plane network element in the data transmission method according to the foregoing third aspect. The instruction includes a program required by the user plane network element to perform a manner designed in the foregoing third aspect.

According to a seventeenth aspect, an embodiment of this application provides a computer storage medium, configured to store a computer software instruction that is used by the terminal in the data transmission method according to the foregoing fourth aspect. The instruction includes a program required by the terminal to perform a manner designed in the foregoing fourth aspect.

According to an eighteenth aspect, an embodiment of this application further provides a chip. The chip is coupled to a receiver and/or a transmitter in a multicast transmission control network element, to perform the technical solution provided in the first aspect of the embodiments of this application. It should be understood that, "coupling" in the embodiments of this application means that two components are directly or indirectly combined with each other. Such a combination may be fixed or movable, and may allow communication of a flowing liquid, electricity, an electrical signal, or another type of signal between the two components.

According to a nineteenth aspect, an embodiment of this application further provides a chip. The chip is coupled to a receiver and/or a transmitter in an access and mobility management network element, to perform the technical solution in the second aspect of the embodiments of this application.

According to a twentieth aspect, an embodiment of this application further provides a chip. The chip is coupled to a receiver and/or a transmitter in a user plane network element, to perform the technical solution in the third aspect of the embodiments of this application.

According to a twenty-first aspect, an embodiment of this application further provides a chip. The chip is coupled to a receiver and/or a transmitter in a terminal, to perform the technical solution in the fourth aspect of the embodiments of this application.

According to a twenty-second aspect, an embodiment of the present invention provides a chip system. The chip system includes a processor, configured to support a multicast transmission control network element in implementing the function included in the foregoing first aspect, for example, generating or processing the information included in the data transmission method according to the foregoing first aspect. In a possible design, the chip system further includes a memory. The memory is configured to store a program instruction and data that are necessary to the multicast transmission control network element. The chip system may include a chip, or may include a chip and another discrete device.

According to a twenty-third aspect, an embodiment of the present invention provides a chip system. The chip system includes a processor, configured to support an access and mobility management network element in implementing the function included in the foregoing second aspect, for example, generating or processing the information included in the data transmission method according to the foregoing second aspect. In a possible design, the chip system further includes a memory. The memory is configured to store a program instruction and data that are necessary to the access and mobility management network element. The chip system may include a chip, or may include a chip and another discrete device.

According to a twenty-fourth aspect, an embodiment of the present invention provides a chip system. The chip system includes a processor, configured to support a user plane network element in implementing the function included in the foregoing third aspect, for example, generating or processing the information included in the data transmission method according to the foregoing third aspect. In a possible design, the chip system further includes a memory. The memory is configured to store a program instruction and data that are necessary to the user plane network element. The chip system may include a chip, or may include a chip and another discrete device.

According to a twenty-fifth aspect, an embodiment of the present invention provides a chip system. The chip system includes a processor, configured to support a terminal in implementing the function included in the foregoing fourth aspect, for example, generating or processing the information in the data transmission method according to the foregoing fourth aspect. In a possible design, the chip system further includes a memory. The memory is configured to store a program instruction and data that are necessary to the terminal. The chip system may include a chip, or may include a chip and another discrete device.

By implementing the embodiments of this application, reporting efficiency of data reception quality can be improved, reliability of data transmission can be enhanced, efficiency of data transmission can be improved, and applicability is higher.

### BRIEF DESCRIPTION OF DRAWINGS

FIG. 1 is an infrastructure of a communications system according to an embodiment of this application;
FIG. 2 is a schematic architectural diagram of a data transmission system of a 3GPP MBMS;
FIG. 3 is another schematic architectural diagram of a data transmission system according to an embodiment of this application;
FIG. 4 is a schematic flowchart of a data transmission method according to an embodiment of this application;
FIG. 5 is another schematic flowchart of a data transmission method according to an embodiment of this application;
FIG. 6 is another schematic flowchart of a data transmission method according to an embodiment of this application;
FIG. 7 is another schematic flowchart of a data transmission method according to an embodiment of this application;
FIG. 8 is a schematic structural diagram of a multicast transmission control network element according to an embodiment of this application;
FIG. 9 is a schematic structural diagram of an access and mobility management network element according to an embodiment of this application;
FIG. 10 is a schematic structural diagram of a user plane network element according to an embodiment of this application;
FIG. 11 is a schematic structural diagram of a terminal according to an embodiment of this application; and
FIG. 12 is a schematic structural diagram of a communications device according to an embodiment of this application.

### DESCRIPTION OF EMBODIMENTS

A data transmission method provided in embodiments of this application may be applicable to a long term evolution (long term evolution, LTE) system, or another wireless communications system using various radio access technologies, for example, a system using access technologies such as code division multiple access (code division multiple access, CDMA), frequency division multiple access (frequency division multiple access, FDMA), time division multiple access (time division multiple access, TDMA), orthogonal frequency division multiple access (orthogonal frequency division multiple access, OFDMA), and single carrier-frequency division multiple access (single carrier-frequency division multiple access, SC-FDMA). The data transmission method is also applicable to a subsequent evolution system such as a 5^{th} generation radio (5th generation, 5G, also referred to as a new radio (New radio, NR)) system.

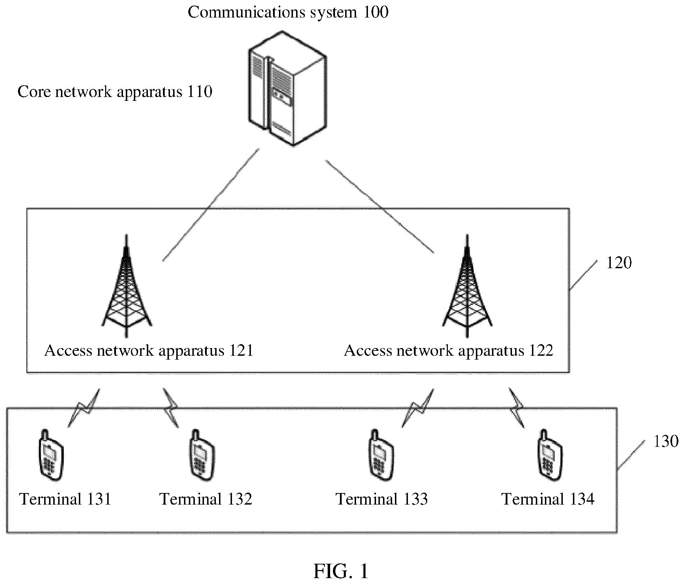

FIG. 1 is an infrastructure of a communications system according to an embodiment of this application. A communications system 100 provided in this embodiment of this application may include a core network apparatus 110, an access network apparatus 120, and a terminal 130. As shown in FIG. 1, the access network apparatus 120 described in this embodiment of this application may include an access network apparatus 121 and an access network apparatus 122, and the terminal 130 may include a terminal 131, a terminal 132, a terminal 133 and a terminal 134. The terminal 131 and the terminal 132 may access the communications system 100 through the access network apparatus 121, and the access network apparatus 121 obtains service data that is transmitted by an operator network through the core network apparatus 110. The terminal 133 and the terminal 134 may access the communications system 100 through the access network apparatus 122, and the access network apparatus 122 obtains service data that is transmitted by the operator network through the core network apparatus 110. The access network apparatus 121, the access network apparatus 122, the terminal 131, the terminal 132, the terminal 133, the terminal 134 and the like described above are merely examples. The communications system 100 provided in this embodiment of this application includes, but is not limited to, the foregoing network apparatus. This is not limited herein. A quantity of the access network apparatuses and the terminals included in the communications system 100 provided in this embodiment of this application may be determined based on an actual application scenario. This is not limited herein.

The terminal device included in the embodiments of this application may also be referred to as user equipment (user equipment, UE), an access terminal, a subscriber unit, a subscriber station, a mobile station, a remote station, a remote terminal, a mobile apparatus, a user terminal, a wireless communications apparatus, a user agent, a user apparatus, or the like. This is not limited herein. UE is a name of a terminal in a communications system based on a 3GPP communication technology. The terminal provided in the embodiments of this application may be an apparatus providing voice and/or data connectivity for a user, and include a wired terminal and a wireless terminal. The wireless terminal may be a handheld apparatus having a wireless connection function, another processing apparatus connected to a wireless modem, or a mobile terminal that communicates with one or more core networks through a radio access network. For example, the wireless terminal may be a mobile phone, a computer, a tablet computer, a personal digital assistant (personal digital assistant, PDA), a mobile Internet device (mobile Internet device, MID), a wearable device, an e-book reader (e-book reader), and the like. For another example, the wireless terminal may be a portable, pocket-sized, handheld, computer built-in, or an in-vehicle mobile apparatus. For still another example, the wireless terminal may be a mobile station (mobile station) or an access point (access point). For ease of description, in the following description of this application, the apparatuses mentioned above are described by using the terminal as an example.

The access network apparatus included in the embodiments of this application may be a base station. The base station is an apparatus that is deployed in a radio access network (radio access network, RAN) and that is configured to provide a wireless communication function and broadcast data and/or multicast data to the terminal. The foregoing base station may include a macro base station, a micro base station, a relay station, an access point base station controller, a transmission reception point (transmission reception point, TRP), or the like in various forms. In a system using different radio access technologies, specific names of the base station may be different. For example, in an LTE network, the base station is referred to as an evolved NodeB (evolved NodeB, eNB), or in a subsequent evolution system, the base station may also be referred to as a new radio NodeB (new radio nodeB, gNB). For ease of description, in the following description of this application, the apparatuses mentioned above are collectively referred to as the access network apparatus. The access network apparatus is mainly responsible for a function, such as radio resource management and quality of service (quality of service, QoS) management, on an air interface side.

The core network apparatus 110 provided in this embodiment of this application may include a core network user plane network element (or briefly referred to as a user plane apparatus, a user plane network element, or the like), a core network control plane network element (or briefly referred to as a control plane apparatus, or a control plane network element), and the like.

The core network user plane network element is the user plane network element, receives a data packet from the terminal, and forwards the data packet.

The core network control plane network element is the control plane network element, and may define a processing action of the user plane network element on the data packet and a forwarding rule for the core network control plane network element to send the data packet to the core network user plane network element. When the data packet arrives at the core network user plane network element, the core network user plane network element correspondingly processes the data packet based on the forwarding rule delivered by the core network control plane network element, and completes forwarding the data packet. The core network control plane network element may store bearer information of the terminal (including an identity of the terminal), information of a local area network to which the terminal belongs, information of a multicast group to which the terminal belongs, information of an access network apparatus to which the terminal belongs, and the like. Information of the terminal stored by the core network control plane network element includes, but is not limited to, the foregoing information. This is not limited herein.

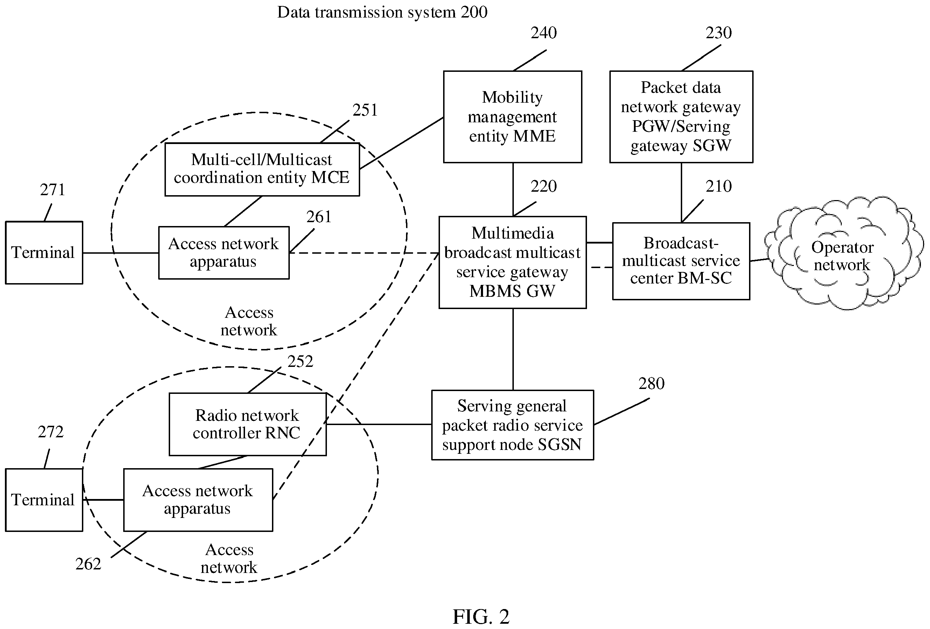

The data transmission method provided in this embodiment of the application is applicable to a data transmission system of a 3GPP MBMS. FIG. 2 is a schematic architectural diagram of a data transmission system of a 3GPP MBMS. The data transmission system 200 includes the following network elements: a broadcast-multicast service center (broadcast-multicast service center, BM-SC) 210, an MBMS gateway (MBMS gateway, GW) 220, a packet data network gateway (packet data network gateway, PGW) and/or a serving gateway (serving gateway, SGW) 230, a mobility management entity (mobility management entity, MME) 240, a multi-cell/multicast coordination entity (multi-cell/multicast coordination entity, MCE) 251, a radio network controller (radio network controller, RNC) 252, an access network apparatus 261, an access network apparatus 262, a terminal 271, a terminal 271, a serving general packet radio service support node (serving general packet radio service support node, SGSN) 280, and the like. In FIG. 2, a solid line "-" represents a control plane connection between network elements, and a dashed line "---" represents a data plane connection between network elements.

As shown in FIG. 2, the BM-SC 210 is a core control unit in the data transmission system 200. The BM-SC 210 may obtain third-party service data from a content provider (content provider), and perform, based on a requirement of the third-party service data, a full-service service of service control and service transmission of the third-party service. The third-party service data may be understood as service data of an operator, including service data of a 3^{rd} generation (3rd-generation, 3G) mobile communication technology network, service data of a 4^{th} generation mobile communication technology (the 4th generation mobile communication technology, 4G) network, or the like of the operator. The terminal 271 may be understood as a terminal that belongs to the operator, and the terminal 271 may obtain the service data of the operator through the access network apparatus 261 or the like of the data transmission system 200. The terminal 272 may be understood as another terminal that belongs to the operator, and the terminal 272 may obtain the service data of the operator through the access network apparatus 262 or the like of the data transmission system 200.

The BM-SC 210 may provide a function of a core network control plane network element, and may be understood as one of the core network control plane network elements of the data transmission system 200. Network elements that can provide a core network control plane function in the data transmission system 200 may further include the MBMS GW 220, the MME 240, and the SGSN 280. Network elements, such as the MCE 251 and the RNC 252, in the data transmission system 200 may be understood as access network control plane network elements. The BM-SC 210 may control, through network elements such as the MBMS GW 220, the MME 240, and the MCE 251 in an access network, service data transmitted to the access network apparatus 261, and may further transmit the service data to the terminal 271 through the access network apparatus 261. Alternatively, the MB-SC 210 may control, through a network element such as the MBMS GW 220, the SGSN 280, and the RNC 525 in an access network, service data transmitted to the access network apparatus 262, and may further transmit the service data to the terminal 272 through the access network apparatus 262.

The MBMS GW 220 may further provide a function of a core network user plane network element. The MBMS GW 220 may obtain the service data of the 3G network and/or the service data of the 4G network of the operator from the BM-SC 210. The MBMS GW 220 may transmit the service data of the 4G network of the operator to the access network apparatus 261, and the access network apparatus 261 may transmit the service data to the terminal 271. The MBMS GW 220 may transmit the service data of the 3G network of the operator to the access network apparatus 262, and the access network apparatus 262 may transmit the service data to the terminal 272. The service data of the 3G network and/or the service data of the 4G network described above are merely examples, and the service data of the operator network includes, but is not limited to, the service data of the 3G network and/or the service data of the 4G network. This is not limited herein.

In the data transmission system shown in FIG. 2, network elements included in the access network part are the access network apparatus 261, the access network apparatus 262, the MCE 251, and the RNC 252. The access network apparatus 261 and the MCE 251 may form a universal mobile telecommunications system terrestrial radio access network (universal mobile telecommunications system terrestrial radio access network, UTRAN) part in a 3G communications network, and the access network apparatus 262 and the RNC 525 may form an evolved universal terrestrial radio access network (evolved universal terrestrial radio access network, E-UTRAN) part in an LTE network. The terminal 271 may access the LTE network through the access network apparatus 261 and the MCE, and obtain data of the 4G network from the data transmission system. The terminal 271 may access the 3G network through the access network apparatus 261 and the RNC, and obtain data of the 3G network from the data transmission system.

The PGW and/or the SGW 230 may be a border gateway of the data transmission system 200, and provide functions such as session management and bearer control of a user (including the terminal 271, the terminal 272, and/or the like) of the operator, data forwarding, IP address assignment, and non-3GPP user access. The MME 240 is responsible for signaling processing, including a positioning and paging procedure of a terminal in an idle mode, or a procedure such as bearer activation and/or shutdown of the terminal. The SGSN 280 is an important component of a core network packet domain apparatus, and mainly implements functions such as route forwarding of a data packet, mobility management, session management, logical link management, authentication and encryption, and bill generation and output.

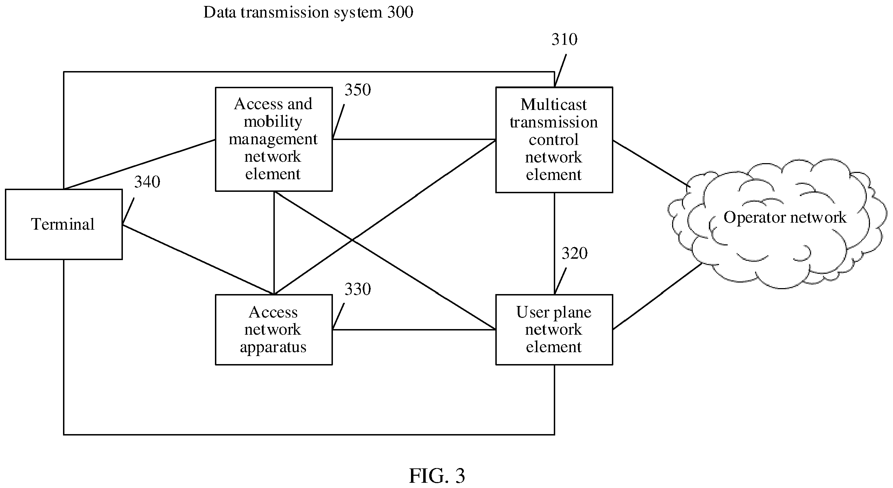

FIG. 3 is another schematic architectural diagram of a data transmission system according to an embodiment of this application. The data transmission system 300 provided in this embodiment of this application may be a data transmission system improved based on the network element included in the data transmission system 200 described above. The transmission system 300 may include a multicast transmission control network element 310, a user plane network element 320, an access network apparatus 330, and a terminal 340. The multicast transmission control network element 310 may be configured to control a network element that performs an operation such as creating a multicast transmission path, and/or deleting a multicast transmission path, and/or updating a multicast transmission path. It may be understood that the multicast transmission control network element 310 may provide a control plane function of the network element, such as the BM-SC 210, the MBMS GW 220, the MME 240, and the SGSN 280, included in the data transmission system 200. This is not limited herein. The user plane network element 320 may be configured to perform an operation such as data distribution of the multicast transmission path. It may be understood that the user plane network element 320 may provide a user plane function of the network element, such as the BM-SC 210, the PGW and/or the SGW 230, and the MBMS GW 220, included in the data transmission system 200. This is not limited herein.

In the data transmission system 300 shown in FIG. 3, the multicast transmission control network element 310 communicates with the terminal by using a non-access stratum message. The user plane network element (for example, the user plane function (user plane function, UPF)) sends service data of an operator to the access network apparatus 330 in a data transmission manner such as unicast transmission or multicast transmission, and the access network apparatus 330 sends the service data to the terminal 340.

As shown in FIG. 3, the data transmission system 300 may further include an access and mobility management network element 350. The access and mobility management network element 350 is configured to receive the non-access stratum message sent by the terminal 340, and forward the non-access stratum message to the user plane network element 320.

A non-access stratum (non-access stratum, NAS) exists in a wireless communication protocol stack defined by the 3GPP as a functional stratum between a core network and the terminal. The non-access stratum supports signaling transmission and/or data transmission between the core network and the terminal. A typical representation is signaling transmission and/or data transmission between a terminal and an SGSN in a wideband code division multiple access (wideband code division multiple access, WCDMA) system of a 3G network, and signaling transmission and/or data transmission between a terminal and an MME in an evolved packet system (evolved packet system, EPS) of a 4G network. However, for a 5^{th} generation mobile communication technology (5th-generation, 5G) system, a typical representation may be signaling transmission and/or data transmission between a terminal and an access and mobility management function (access and mobility management function, AMF). In the protocol stack, a radio resource control (radio resource control, RRC) stratum, a RAN access point (access point, RAN AP) stratum, and another protocol stratum below are referred to as access strata. Briefly, a procedure of the access stratum is a procedure that a base station in an access network needs to participate in processing. A procedure of the non-access stratum is a signaling procedure that only network elements of the terminal and the core network need to process, and that network elements and/or apparatuses, such as an RNC (WCDMA system) and a base station, in the access network do not need to process.

According to a data transmission method and apparatus provided in the embodiments of this application, a terminal may report, by using a non-access stratum message, reception quality indication information of data received on a multicast transmission path to an access and mobility management network element. The access and mobility management network element forwards the non-access stratum message to a multicast transmission control network element based on the reception quality indication information reported by the terminal. The multicast transmission control network element performs data retransmission or determines, based on the reception quality indication information of the terminal, to start a unicast transmission path to assist the multicast transmission path in transmission, and may further instruct a user plane network element to start the unicast transmission path for data transmission, thereby improving reporting efficiency of data reception quality of the terminal and enhancing reliability of the data transmission.

The method provided in the embodiments of this application may be applicable to the data transmission system 300 shown in FIG. 3. The data transmission system 300 may perform a data transmission method provided in the following embodiments of the embodiments of this application through the network elements and/or the apparatuses included in the data transmission system 300.

Optionally, the multicast transmission path provided in the embodiments of this application may alternatively be a multicast bearer (for example, an MBMS bearer), and/or a multicast session (session, for example, an MBMS session), and/or a data flow of a multicast session. This may be specifically determined based on an actual application scenario and is not limited herein. For ease of description, the following embodiments of this application are described by using the multicast transmission path as an example.

Optionally, the unicast transmission path provided in the embodiments of this application may alternatively be referred to as a unicast bearer, and/or a unicast session, and/or a data flow of a session. This may be specifically determined based on an actual application scenario and is not limited herein. For ease of description, the following embodiments of this application are described by using the unicast transmission path as an example.

Optionally, a multicast service entity provided in the embodiments of this application may be understood as a functional entity that determines a transmission (unicast transmission, multicast transmission, or the like) mode of service data of an operator network. Optionally, the functional entity may be provided by a third-party application server, or may be an independent network element in the operator network dedicated to providing a control function of a multicast service, or a network element function deployed integrally with the multicast transmission control network element.

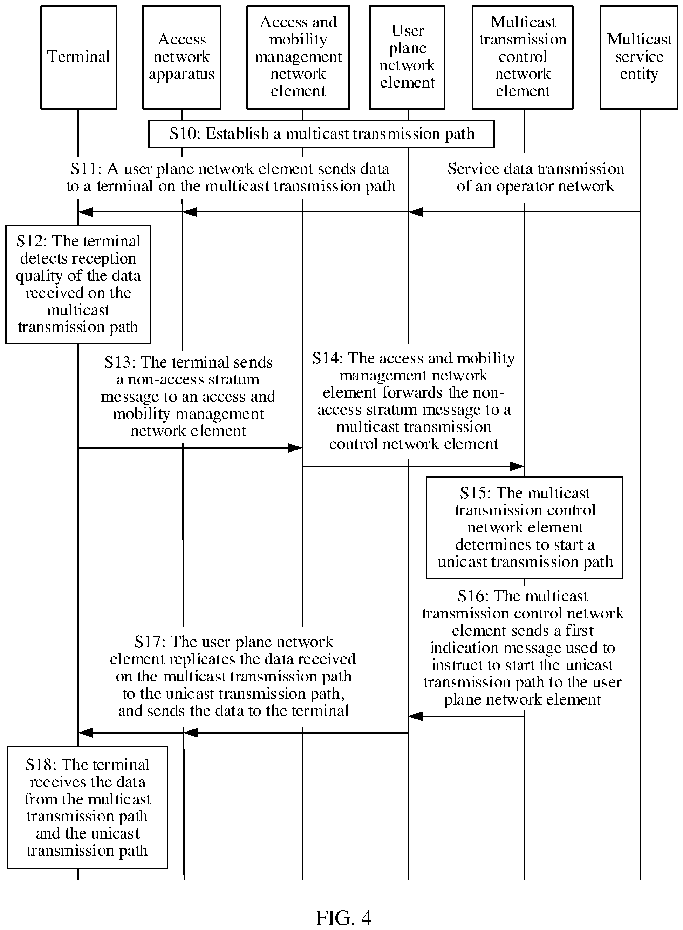

FIG. 4 is a schematic flowchart of a data transmission method according to an embodiment of this application. The data transmission method provided in this embodiment of this application may include the following steps.

S 10: Establish a multicast transmission path.

In a feasible implementation, in an establishment procedure of the multicast transmission path, a multicast transmission control network element may interact with a user plane network element, an access and mobility management network element, and an access network apparatus, to negotiate and allocate parameters of the multicast transmission path. The parameters of the multicast transmission path may include, but is not limited to, identification information of the multicast transmission path, a multicast network protocol (internet protocol, IP) address, and the like. A terminal may obtain information of the multicast transmission path through the access network apparatus, and may further monitor service data of an operator network on the multicast transmission path.

S 11: A user plane network element sends data to a terminal on the multicast transmission path.

In a feasible implementation, the user plane network element may obtain the service data of the operator from a multicast service entity, send the service data of the operator network to the access network apparatus on the multicast transmission path, and send the service data of the operator network to the terminal through the access network apparatus.

S 12: The terminal detects reception quality of the data received on the multicast transmission path.

In a feasible implementation, the terminal may periodically detect the reception quality of the service data transmitted on the multicast transmission path, and periodically report reception quality indication information of the data transmitted on the multicast transmission path to a core network.

Optionally, if the terminal detects a problem, such as loss of a data packet, when the data is received on the multicast transmission path, the terminal may alternatively report the reception quality indication information of the data received on the multicast transmission path to the core network.

It should be noted that the execution of step S 12 is independent of the execution of step S11. That is, the terminal may alternatively perform an operation of detecting the reception quality of the data received on the multicast transmission path before the data is sent on a network side. This is not limited herein.

S13: The terminal sends a non-access stratum message to an access and mobility management network element.

In a feasible implementation, the terminal may feed back, by using the non-access stratum message, the reception quality indication information of the data received on the multicast transmission path to the core network. Optionally, the terminal may send the non-access stratum message (where for ease of description, the following embodiments are described by using a non-access stratum message 1 as an example) to the access and mobility management network element of the core network. The non-access stratum message 1 may include the reception quality indication information of the data received by the terminal on the multicast transmission path. The foregoing reception quality indication information may include feedback information indicating whether the problem, such as loss of the data packet, occurs when the data is received on the multicast transmission path.

S14: The access and mobility management network element forwards the non-access stratum message to a multicast transmission control network element.

In a feasible implementation, after receiving the non-access stratum message 1 sent by the terminal, the access and mobility management network element may determine, based on identification information of the multicast transmission control network element carried in the non-access stratum message 1, to forward the non-access stratum message (for example, a first non-access stratum message, where for ease of description, the following embodiments are described by using a non-access stratum message 2 as an example) to the multicast transmission control network element. The non-access stratum message 2 forwarded by the access and mobility management network element to the multicast transmission control network element may be obtained by using the non-access stratum message 1 sent by the terminal, and the reception quality indication information of the data received by the terminal on the multicast transmission path is carried in the non-access stratum message 2. The non-access stratum message 2 may be the same as or different from the non-access stratum message 1 sent by the terminal. Optionally, the access and mobility management network element may extract useful information, such as the reception quality indication information, from the non-access stratum message 1 sent by the terminal, obtain the non-access stratum message 2 by performing processing based on the useful information in the non-access stratum message 1, and forward the non-access stratum message 2 to the multicast transmission control network element.

S15: The multicast transmission control network element determines to start a unicast transmission path.

In a feasible implementation, after receiving the non-access stratum message 2 sent by the access and mobility management network element, the multicast transmission control network element may determine, based on the reception quality indication information carried in the non-access stratum message 2, a state in which the terminal receives the data on the multicast transmission path, and may further determine, based on an actual application scenario requirement, whether the unicast transmission path needs to be started to assist the multicast transmission path in data transmission.

In this embodiment of this application, that the unicast transmission path assists the multicast transmission path in data transmission means that the multicast transmission path and the unicast transmission path are simultaneously used to send the data to the terminal, and the data sent to the terminal on the unicast transmission path is the same as the data sent to the terminal on the multicast transmission path. A data transmission module that simultaneously starts the unicast transmission path and the multicast transmission path to send data to the terminal is also referred to as a dual-stream mode for data transmission. The data is mainly sent to the terminal by using the multicast transmission path, and the multicast transmission path is a primary transmission path. Only when reception quality of the data received by the terminal on the multicast transmission path cannot satisfy a service requirement of the terminal, the unicast transmission path is simultaneously started to send the data to the terminal, and the unicast transmission path is a secondary transmission path. Therefore, the unicast transmission path is referred to as a path for assisting the multicast transmission path in transmitting the data to the terminal.

Optionally, if the multicast transmission control network element determines, based on reception quality indication information, that the problem, such as loss of the data packet, occurs when the terminal receives the data on the multicast transmission path, the multicast transmission control network element may determine to start the unicast transmission path, and may further trigger an establishment and/or activation procedure of the unicast transmission path, to trigger the dual-stream mode for unicast transmission and multicast transmission.

S16: The multicast transmission control network element sends a first indication message used to instruct to start the unicast transmission path to the user plane network element.

In a feasible implementation, when determining to start the unicast transmission path, the multicast transmission control network element may send the first indication message to the user plane network element. The first indication message is used to instruct the user plane network element to start the unicast transmission path. For ease of description, for the first indication message, the following embodiments are described by using an indication message 1 as an example. Optionally, the indication message 1 may include identification information (first identification information) of a to-be-started unicast transmission path (for example, a first unicast transmission path, where for ease of description, the following embodiments are described by using a unicast transmission path 1 as an example) and identification information (second identification information) of the multicast transmission path. The indication message 1 is used to instruct the user plane network element to replicate data of a multicast transmission path indicated by the second identification information to a unicast transmission path (that is, the unicast transmission path 1) identified by the first identification information, and send the data on the unicast transmission path to the terminal 1.

S17: The user plane network element replicates the data received on the multicast transmission path to the unicast transmission path, and sends the data to the terminal.

In a feasible implementation, when receiving the indication message sent by the multicast transmission control network element, the user plane network element may determine and start the unicast transmission path (that is, the unicast transmission path 1) based on the identification information of the unicast transmission path carried in the indication message. The user plane network element may further replicate, based on the identification information of the multicast transmission path carried in the indication message 1, the data transmitted on the multicast transmission path to the unicast transmission path 1 that is started, and send the data on the unicast transmission path to the terminal 1.

S 18: The terminal receives the data from the multicast transmission path and the unicast transmission path.

In a feasible implementation, the terminal may receive, through the access network apparatus, the indication message used to instruct to start the unicast transmission path, and may further monitor the data transmitted on the multicast transmission path and the data transmitted on the unicast transmission path simultaneously. Optionally, the terminal may further determine, based on indication information (that is, a third indication message) sent by the multicast transmission control network element through the access network apparatus, that the data transmitted on the unicast transmission path is the same as the data transmitted on the multicast transmission path.

In this embodiment of this application, the terminal may report, by using the non-access stratum message, a status in which the data is received on the multicast transmission path, and may further trigger the multicast transmission control network element to start the dual-stream mode for the unicast transmission and the multicast transmission. The data is sent to the terminal by using the unicast transmission path and the multicast transmission path. In this embodiment of this application, the reception quality indication information of the data received by the terminal on the multicast transmission path is reported by using the non-access stratum message, so that reporting efficiency of multicast data reception quality is improved, data quality of multicast data transmission is ensured, transmission reliability of service data of the operator network can be enhanced, and applicability is higher.

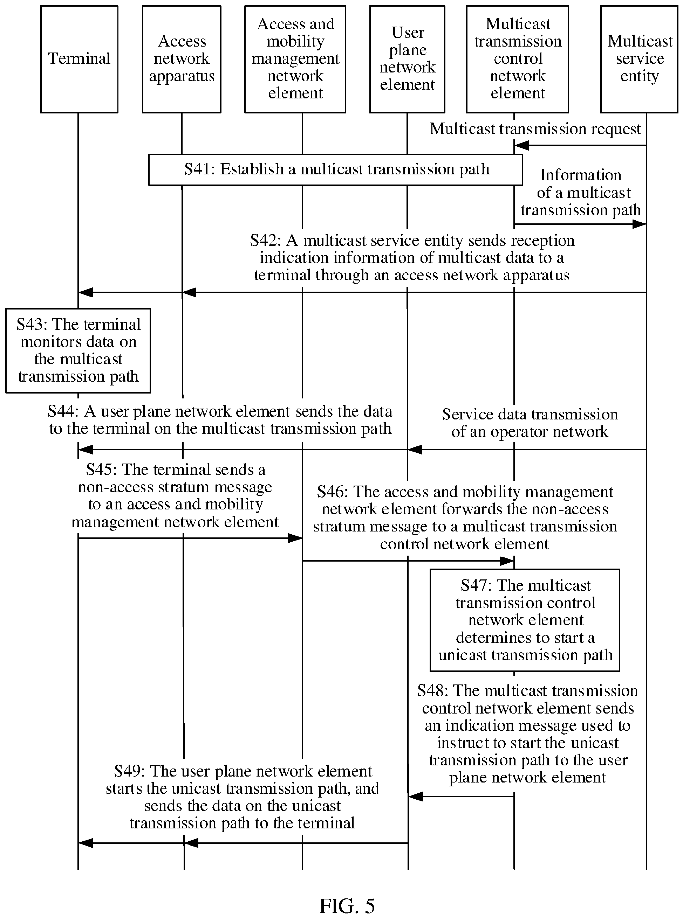

FIG. 5 is another schematic flowchart of a data transmission method according to an embodiment of this application. The data transmission method provided in this embodiment of this application may include the following steps.

S41: Establish a multicast transmission path.

In a feasible implementation, a multicast service entity may determine, based on a service requirement of an operator network, that multicast transmission needs to be performed on service data of the operator network, and send a multicast transmission request to a multicast transmission control network element. Specifically, the multicast service entity may send an indication message used to instruct to establish the multicast transmission path to the multicast transmission control network element in a core network.

Optionally, the indication message used to instruct to establish the multicast transmission path may also be referred to as an activation request of the multicast transmission path, a creation request of the multicast transmission path, a modification request of the multicast transmission path, or the like. This is not limited herein.

In a feasible implementation, after receiving the indication message that is used to instruct to establish the multicast transmission path and that is sent by the multicast service entity, the multicast transmission control network element may establish the multicast transmission path with a user plane network element, an access and mobility management network element, and an access network apparatus. The multicast transmission path may be used to transmit the service data of the operator network to the access network apparatus, and the service data is sent to the terminal through the access network apparatus.

When the multicast service entity is provided by a third-party application server, the multicast service entity may directly send the indication message used to instruct to establish the multicast transmission path to the multicast transmission control network element, or the multicast service entity may send the indication message used to instruct to establish the multicast transmission path to the multicast transmission control network element through a network capability exposure entity. The network capability exposure entity may alternatively be referred to as a network exposure function (network exposure function, NEF). This may be specifically determined based on an actual application scenario and is not limited herein.

Optionally, the multicast transmission control network element may provide a related service for the multicast service entity by using a serviced application programming interface (application programming interface, API). When the multicast service entity has a transmission requirement, a related procedure is triggered by calling a serviced API interface service. For example, when the multicast service entity has a transmission requirement, an establishment procedure of the multicast transmission path is triggered by calling the serviced API interface service. In the establishment procedure of the multicast transmission path, the multicast transmission control network element may interact with the user plane network element, the access and mobility management network element, and the access network apparatus, to negotiate and allocate parameters of the multicast transmission path. The parameters of the multicast transmission path may include, but is not limited to, identification information of the multicast transmission path, a multicast network protocol (internet protocol, IP) address, and the like.

In a feasible implementation, after the multicast transmission path is established, the multicast transmission control network element may allocate the identification information of the multicast transmission path. The multicast transmission control network element may feed back a response message for establishing the multicast transmission path to the multicast service entity, and feed back information of the multicast transmission path by using the response message. It may be understood that the response message is used to notify the multicast service entity that the multicast transmission path is established and may be used to transmit data, and the multicast service entity may transmit the service data by using the multicast transmission path. The response for establishing the multicast transmission path may also be referred to as an activation response of the multicast transmission path, a creation response of the multicast transmission path, a modification response of the multicast transmission path, or the like. This is not limited herein.

Optionally, the response message for establishing the multicast transmission path may include identification information of the multicast transmission control network element. The identification information of the multicast transmission control network element may include at least one of an identity (identity, ID) of the multicast transmission control network element, an IP address, bearer ID information including a network element identity, and another parameter that may be uniquely mapped to the multicast transmission control network element. This is not limited herein.

Optionally, the identification information of the multicast transmission control network element may be an independent parameter, or may be implicitly carried in the identification information of the multicast transmission path. Optionally, the multicast transmission control network element may provide a related service for the multicast service entity by using a serviced API interface. When the multicast service entity has a transmission requirement, a related procedure is triggered by calling a serviced API interface service, and the multicast transmission control network element returns, by calling the serviced API interface, one or more pieces of information, such as an identity of the multicast transmission control network element, bearer ID information including the identity of the multicast transmission control network element, session ID information including the identity of the multicast transmission control network element, or another parameter that may be uniquely mapped to the multicast transmission control network element to the multicast service entity.

S42: A multicast service entity sends reception indication information of multicast data to a terminal through an access network apparatus.

In a feasible implementation, the multicast service entity may send the reception indication information of the multicast data to the terminal through the access network apparatus. The reception indication message of the multicast data may also be referred to as a service announcement message. The service announcement message may include the identity of the multicast transmission path, or may include information such as the identity of the multicast transmission control network element. The identity of the multicast transmission path may include an ID of a bearer and/or a session and/or a data flow of the multicast transmission, and/or a multicast IP address of a bearer and/or a session and/or a data flow of the multicast transmission. The reception indication information is used to instruct the terminal to monitor the multicast data on the multicast transmission path.

Optionally, in a feasible implementation, the multicast service entity may obtain the identification information of the multicast transmission control network element from the response message for establishing the multicast transmission path sent by the multicast transmission control network element, as shown in step 41, or may obtain the identification information of the multicast transmission control network element in advance from the multicast transmission control network element or an API entry before step 41. Optionally, when the multicast service entity obtains the identification information of the multicast transmission control network element from the multicast transmission control network element, the identity of the multicast transmission control network element may be carried independently, or may be carried in the identity of the multicast transmission path. For example, the identity of the multicast transmission control network element may alternatively be carried in a parameter to be transmitted to the multicast service entity. This may be specifically determined based on an actual application scenario and is not limited herein.

Optionally, that the multicast service entity obtains the identification information of the multicast transmission control network element from an API entry may specifically mean that the multicast service entity obtains, from an API entry in a service discovery manner, identification information of a network element that may provide multicast transmission control, that is, the identification information of the multicast transmission control network element. For example, when the multicast service entity is the third-party application server, the multicast service entity may obtain the identification information of the multicast transmission control network element from a northbound API entry, where the northbound API is an application-oriented API.

It should be noted that the implementation described in step S41 and S42 is a feasible manner in which the multicast service entity obtains the identification information of the multicast transmission path (that is, identification information of the bearer and/or the session of the multicast transmission). In a specific implementation, the multicast service entity may alternatively obtain the identification information of the multicast transmission path by using another implementation. For example, the multicast service entity may obtain the identification information of the multicast transmission path in a pre-configured manner. This is not limited herein.

S43: The terminal monitors data on the multicast transmission path.

In a feasible implementation, after obtaining the identification information of the multicast transmission path and/or the identification information of the multicast transmission control network element by using the reception indication information of the multicast data, the terminal may monitor the service data of the operator network on the multicast transmission path indicated by the identification information of the multicast transmission path.

S44: A user plane network element sends the data to the terminal on the multicast transmission path.

Optionally, the multicast service entity may send the service data of the operator network to the terminal through the user plane network element and the access network apparatus in the core network. The user plane network element in the core network may send the service data of the operator network to the access network apparatus on the multicast transmission path, and the access network apparatus may send the service data of the operator network to the terminal.

S45: The terminal sends a non-access stratum message to an access and mobility management network element.

For an implementation in which the terminal detects reception quality of the data received on the multicast transmission path, refer to the implementation described in step S 12 in the foregoing embodiment. Details are not described herein again.

For an implementation in which the terminal sends a non-access stratum message 1 to the access and mobility management network element, refer to the implementation described in step S13 in the foregoing embodiment. Details are not described herein again.

S46: The access and mobility management network element forwards the non-access stratum message to a multicast transmission control network element.

For an implementation in which the access and mobility management network element forwards a non-access stratum message 2 to the multicast transmission control network element, refer to the implementation described in step S14 in the foregoing embodiment. Details are not described herein again.

Optionally, after receiving the non-access stratum message 1 of the terminal, the access and mobility management network element may determine a forwarding object of the non-access stratum message in any one of Manner 1 to Manner 3 below, and send the non-access stratum message 2 to the forwarding object.

### Manner 1:

Optionally, when the terminal reports the reception quality of the data received on the multicast transmission path to the access and mobility management network element by using the non-access stratum message, the identification information of the multicast transmission control network element may be carried in the non-access stratum message (for example, the non-access stratum message 1). The access and mobility management network element may determine, based on the identification information of the multicast transmission path carried in the non-access stratum message 1, to create and/or activate the multicast transmission control network element of the multicast transmission path, and send the non-access stratum message (for example, the non-access stratum message 2) to the multicast transmission control network element.

### Manner 2:

Optionally, in a feasible implementation, after step S41, the multicast transmission control network element may send the identification information of the multicast transmission path to the access and mobility management network element after the multicast transmission path is established. After receiving the identification information of the multicast transmission path, the access and mobility management network element may bind the identification information of the multicast transmission path to the identification information of the multicast transmission control network element, and establish and store a mapping relationship between the multicast transmission path and the multicast transmission control network element, to determine the forwarding object of the non-access stratum message during the subsequent forwarding of the non-access stratum message. In this implementation, when sending the service announcement message to the terminal, the multicast service entity does not need to add the identification information of the multicast transmission control network element to the service announcement message. When the terminal reports a reception quality indication of the service data received on the multicast transmission path to the access and mobility management network element, only the identification information of the multicast transmission path needs to be carried in the non-access stratum message 1, and the identification information of the multicast transmission control network element does not need to be carried in the non-access stratum message 1, so that resources used for data transmission can be reduced. When the terminal reports the reception quality indication information of the data on the multicast transmission path to the access and mobility management network element by using the non-access stratum message 1, the identification information of the multicast transmission path may be carried in the non-access stratum message 1. The access and mobility management network element may determine, based on the identification information of the multicast transmission path carried in the non-access stratum message 1 and the mapping relationship, a multicast transmission control network element corresponding to the identification information of the multicast transmission path, and send the non-access stratum message 2 to the multicast transmission control network element. The manner is simple to operate and has higher data processing efficiency.

### Manner 3:

Optionally, in a feasible implementation, when the terminal reports the reception quality indication information of the data received on the multicast transmission path to the access and mobility management network element by using the non-access stratum message 1, the identification information of the multicast transmission path may alternatively be carried in the non-access stratum message 1, and the identification information of the multicast transmission path includes information that identifies the multicast transmission control network element. For example, an identity ID of the multicast transmission path may include a flag bit used to indicate the multicast transmission control network element, and the multicast transmission control network element may be determined based on the flag bit. The access and mobility management network element may determine the multicast transmission control network element based on information carried in the identification information of the multicast transmission path, and send the non-access stratum message 2 to the multicast transmission control network element.

The implementation in which the access and mobility management network element determines the forwarding object of the non-access stratum message may be one or more of Manner 1 to Manner 3 described above. This is not limited herein.

S47: The multicast transmission control network element determines to start a unicast transmission path.

For an implementation in which the multicast transmission control network element determines to start a unicast transmission path 1, refer to the implementation described in step S15 in the foregoing embodiment. Details are not described herein again.

S48: The multicast transmission control network element sends an indication message used to instruct to start the unicast transmission path to the user plane network element.

For an implementation in which the multicast transmission control network element sends an indication message used to instruct to start the unicast transmission path 1 to the user plane network element, refer to the implementation described in step S16 in the foregoing embodiment. Details are not described herein again.

Optionally, the indication message used to instruct to start the unicast transmission path (for example, the indication message 1) may include a creation message of the unicast transmission path, and/or an activation message of the unicast transmission path, and/or a modification message of the unicast transmission path. The user plane network element may create the unicast transmission path (for example, the unicast transmission path 1) based on the identification information of the unicast transmission path carried in the creation message. Optionally, the user plane network element may alternatively activate, based on the activation message carried in the indication information, the unicast transmission path that is previously created, to obtain the unicast transmission path 1, or may modify, based on the modification message carried in the indication message, information of the unicast transmission path that is previously created, to obtain the unicast transmission path 1. The unicast transmission path 1 is used to assist the multicast transmission path in transmitting data to the terminal.

S49: The user plane network element starts the unicast transmission path, and sends the data on the unicast transmission path to the terminal.

For an implementation in which the user plane network element sends the data on the unicast transmission path to the terminal 1, refer to the implementation described in step S17 in the foregoing embodiment. Details are not described herein again.

Optionally, the indication message 1 that is used to instruct to start the unicast transmission path 1 and that is sent by the multicast transmission control network element to the user plane network element may further include the identification information (second identification information) of the multicast transmission path and the like. The user plane network element may bind the identification information of the unicast transmission path 1 to the identification information of the multicast transmission path, to determine an auxiliary relationship between the unicast transmission path 1 and the multicast transmission path. Further, the user plane network element may replicate data that is transmitted on the multicast transmission path identified by the second identification information to the unicast transmission path 1, and send the data on the unicast transmission path to the terminal 1, to implement a dual-stream mode for unicast transmission and multicast transmission.

In a feasible implementation, the multicast transmission control network element may send the indication message (for example, a third indication message) used to instruct to start the unicast transmission path to the terminal through the access network apparatus, to trigger the terminal to start the dual-stream mode for the unicast transmission and the multicast transmission. The indication message of the unicast transmission path may include the identification information of the unicast transmission path 1. The identification information of the unicast transmission path 1 may include an ID and/or a unicast IP address and the like of the unicast transmission path 1. The terminal may monitor the data transmitted on the multicast transmission path and the data transmitted on the unicast transmission path 1 simultaneously. The indication message used to instruct to start the unicast transmission path may be used to notify the terminal that the data transmitted on the unicast transmission path 1 is the same as the data transmitted on the multicast transmission path.

In this embodiment of this application, the multicast service entity may trigger the establishment of the multicast transmission path based on a transmission requirement of the service data of the operator network and further obtain the identification information of the multicast transmission path, and the user plane network element may send the reception indication message of the multicast data to the terminal on the multicast transmission path. In this embodiment of this application, the multicast service entity may obtain the identification information of the multicast transmission path in a plurality of manners, so that operation is flexible. The user plane network element may transmit the service data of the operator network to the terminal on the multicast transmission path. The terminal may detect the reception quality of the data received on the multicast transmission path, and may further report, by using the non-access stratum message, a status in which the data is received on the multicast transmission path. After receiving the non-access stratum message of the terminal, the access and mobility management network element may forward the non-access stratum message to the multicast transmission control network element, and may further trigger the multicast transmission control network element to start the dual-stream mode for the unicast transmission and the multicast transmission, and use the unicast transmission path to assist the multicast transmission path in data transmission. In this embodiment of this application, the access and mobility management network element may determine a receiving object of the non-access stratum message in a plurality of manners, and may further forward the non-access stratum message to the receiving object, so that diversity of the implementations of forwarding the non-access stratum message is improved, and applicability is higher. In this embodiment of this application, the data reception quality is reported by using the non-access stratum message, so that reporting efficiency of multicast data reception quality is improved, data quality of the multicast data transmission is ensured, transmission reliability of the service data of the operator network is further enhanced, and applicability is higher.

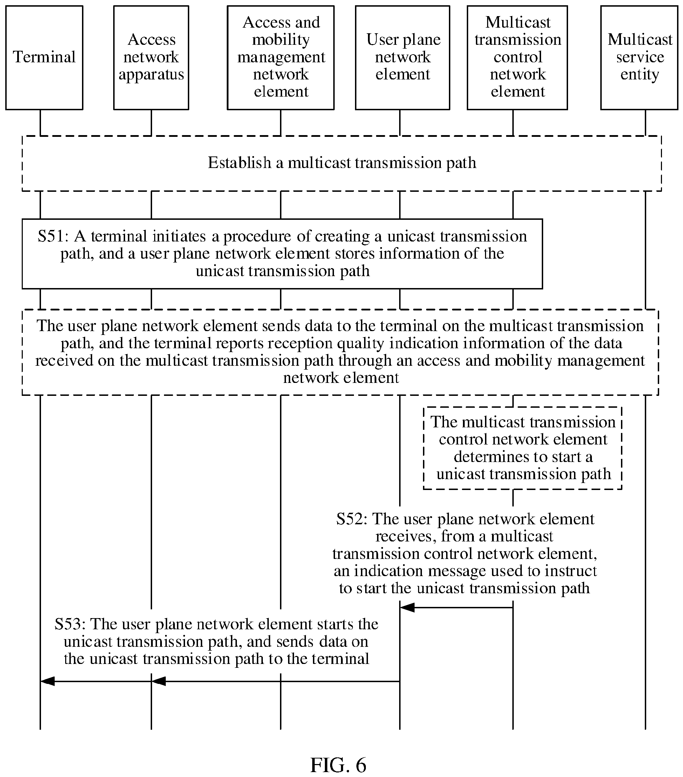

Optionally, in this embodiment of this application, the terminal may determine, based on a service QoS requirement or the reception indication information of the multicast data sent by the multicast service entity through the access network apparatus, that the unicast transmission path needs to be pre-established to assist the multicast transmission path in data transmission. Before the service QoS deteriorates, the terminal may request a multicast transmission control entity in advance for creating a unicast auxiliary path of the multicast transmission path, that is, create the unicast transmission path in advance. Therefore, if subsequent reception quality of the data received on the multicast transmission path cannot satisfy the service requirement of the terminal, the unicast transmission path is started to implement the dual-stream mode in which the multicast transmission and the unicast transmission are simultaneously performed. Optionally, for an implementation of establishing the multicast transmission path and transmitting data on the multicast transmission path, refer to the implementation of the steps in the foregoing embodiment shown in FIG. 5. Details are not described herein again. FIG. 6 is another schematic flowchart of a data transmission method according to an embodiment of this application. The data transmission method provided in this embodiment of this application may include the following steps.

S51: A terminal initiates a procedure of creating a unicast transmission path, and a user plane network element stores information of the unicast transmission path.

For an implementation of establishing the multicast transmission path and the implementation in which the terminal monitors the data on the multicast transmission path, refer to the corresponding implementation in the foregoing embodiments. Details are not described herein again.

In a feasible implementation, when monitoring the data transmitted on the multicast transmission path, the terminal may determine, based on a service QoS requirement, that the unicast transmission path needs to be pre-established to assist the multicast transmission path in data transmission. The terminal may initiate a request for creating the unicast transmission path to an access and mobility management network element, a user plane network element, a multicast transmission control network element, and the like of a core network, trigger the access and mobility management network element, the user plane network element, and the multicast transmission control network element of the core network to negotiate with an access network apparatus, and establish the unicast transmission path (for example, a unicast transmission path 1). After the unicast transmission path 1 is established, the multicast transmission control network element may allocate identification information of the unicast transmission path 1. The user plane network element may store the identification information of the unicast transmission path 1 and identification information of the multicast transmission path, and establish a mapping relationship between the identification information of the multicast transmission path and the identification information of the unicast transmission path 1.

S52: The user plane network element receives, from a multicast transmission control network element, an indication message used to instruct to start the unicast transmission path.

For an implementation in which the user plane network element may send service data of an operator network to the terminal on the multicast transmission path and an implementation in which the terminal may report, through the access and mobility management network element, reception quality of the data received on the multicast transmission path to the multicast transmission control network element, refer to the implementation described in the steps in the foregoing embodiments. Details are not described herein again.

In a feasible implementation, the indication message (for example, an indication message 1) used to instruct to start the unicast transmission path may include an activation message of the unicast transmission path 1. The user plane network element may determine, based on the identification information of the unicast transmission path 1 carried in the indication message 1 and the mapping relationship between the stored identification information of the unicast transmission path 1 and the stored identification information of the multicast transmission path, the unicast transmission path 1 that is pre-established, and activate the unicast transmission path 1, to send the data of the operator network to the terminal by using the unicast transmission path 1.

S53: The user plane network element starts the unicast transmission path, and sends data on the unicast transmission path to the terminal.

For an implementation in which the user plane network element sends the data on the unicast transmission path to the terminal 1, refer to the implementation described in step S49 in the foregoing embodiment. Details are not described herein again.

In this embodiment of this application, before a problem, such as deteriorated reception quality of the data received by the terminal on the multicast transmission path, occurs, the unicast transmission path may be pre-established, so that the unicast transmission path may be quickly started to assist the multicast transmission path in data transmission when the problem, such as deteriorated reception quality of the data received by the terminal on the multicast transmission path, occurs. The unicast transmission path has a higher starting speed, thereby ensuring the reception quality of the data of the operator network received by the terminal, and improving efficiency and reliability of the data transmission.

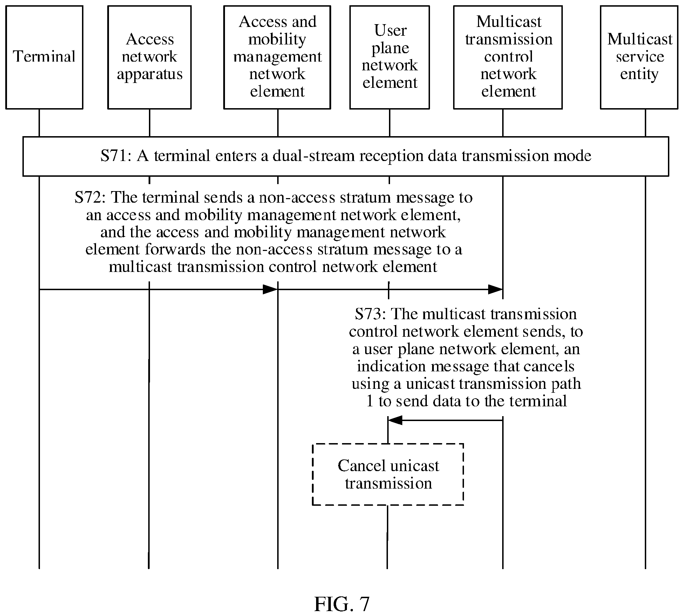

Optionally, in this embodiment of this application, the terminal may enter a dual-stream reception data transmission mode based on the implementation described in any one of the foregoing embodiments, that is, receive the service data on the multicast transmission path and the service data on the unicast transmission path simultaneously. The terminal may alternatively trigger a cancellation procedure of the dual-stream reception data transmission mode after quality of the data received on the multicast transmission path is improved. FIG. 7 is another schematic flowchart of a data transmission method according to an embodiment of this application. The data transmission method provided in this embodiment of this application may include the following steps.

S71: A terminal enters a dual-stream reception data transmission mode.

In a specific implementation, for an implementation in which the terminal enters the dual-stream reception data transmission mode, refer to the implementation described in any one of the implementations of the foregoing embodiments shown in FIG. 4 to FIG. 6. Details are not described herein again.

S72: The terminal sends a non-access stratum message to an access and mobility management network element, and the access and mobility management network element forwards the non-access stratum message to a multicast transmission control network element.

In a feasible implementation, after the terminal starts the dual-stream reception mode of receiving data from the unicast transmission path and receiving data from the multicast transmission path, if the terminal enters an area with higher transmission quality of multicast data transmission, the terminal may alternatively feed back data reception quality on the multicast transmission path to a core network by using the non-access stratum message (that is, a second non-access stratum message, such as a non-access stratum message 3) after detecting that data reception quality on the multicast transmission path satisfies a service requirement such as service QoS, and may further trigger the multicast transmission path of the core network to determine to cancel transmitting the data in the dual-stream mode. In a specific implementation, for an implementation in which the terminal sends the non-access stratum message to the access and mobility management network element and an implementation in which the access and mobility management network element forwards the non-access stratum message to the multicast transmission control network element, refer to the implementations of the corresponding steps in the foregoing embodiments. Details are not described herein again.

S73: The multicast transmission control network element sends, to a user plane network element, an indication message that cancels using a unicast transmission path 1 to send data to the terminal.

Optionally, the multicast transmission control network element may determine, based on a reception quality indication reported by the terminal, to cancel using the unicast transmission path to send data to the terminal, and send, to the user plane network element, an indication message (that is, a second indication message, where for ease of description, an indication message 2 may be used as an example for description) that cancels using the unicast transmission path 1 to send the data to the terminal. After receiving the indication message 2 sent by the multicast transmission control network element, the user plane network element may cancel using the unicast transmission path to send the data to the terminal, that is, cancel unicast transmission. It may be understood that after canceling using the unicast transmission path to send the data to the terminal, the user plane network element still reserves and uses the multicast transmission path to send the data to the terminal, that is, the data transmission mode in which the user plane network element sends the data to the terminal is switched from the dual-stream mode to a single-stream mode, so that transmission resources occupied by sending, by the user plane network element, the data to the terminal can be saved.

In this embodiment of this application, a service requirement of the terminal may be satisfied in the dual-stream transmission mode, and the dual-stream transmission mode may be canceled when quality of the data transmitted on the multicast transmission path is sufficient to satisfy the service requirement of the terminal, thereby reducing resources occupied by the data transmission and improving a resource utilization rate of the data transmission, leading to higher applicability.

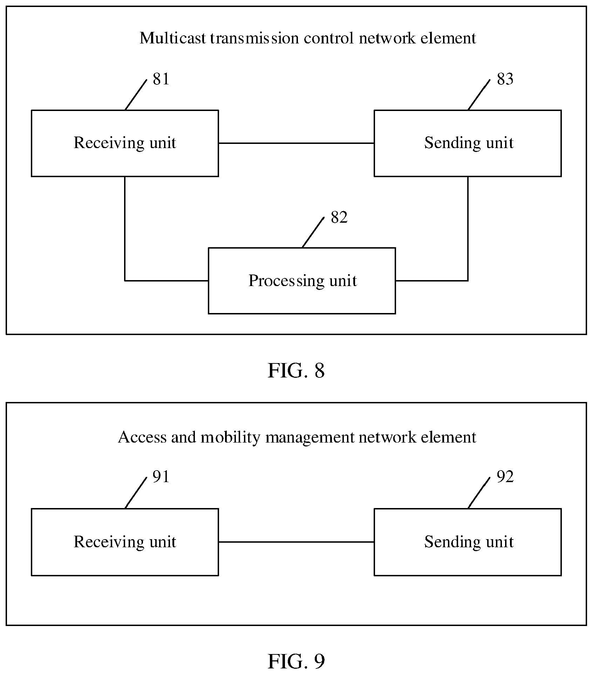

FIG. 8 is a schematic structural diagram of a multicast transmission control network element according to an embodiment of this application. The multicast transmission control network element provided in this embodiment of this application may include:
a receiving unit 81, configured to receive a first non-access stratum message, where the first non-access stratum message includes reception quality indication information of data received by a terminal on a multicast transmission path;
a processing unit 82, configured to determine, after the receiving unit 81 receives the reception quality indication information, to start a unicast transmission path; and
a sending unit 83, configured to send, after the processing unit 82 determines to start the unicast transmission path, a first indication message to a user plane network element, where the first indication message is used to instruct to start a first unicast transmission path, and the first unicast transmission path is used to assist the multicast transmission path in transmitting data to the terminal.

In a feasible implementation, the first indication message includes first identification information of the first unicast transmission path and/or second identification information of the multicast transmission path.

The first identification information and/or the second identification information are or is used to instruct the user plane network element to replicate data transmitted on the multicast transmission path to the first unicast transmission path for transmission.

In a feasible implementation, the multicast transmission path includes a multicast transmission bearer and/or a multicast transmission session.

The first unicast transmission path includes a unicast transmission bearer and/or a unicast transmission session.

In a feasible implementation, the processing unit 82 is further configured to activate the multicast transmission path.

The sending unit 83 is further configured to send identification information of the multicast transmission path to an access and mobility management network element after the processing unit 82 activates the multicast transmission path.

In a feasible implementation, the receiving unit 81 is further configured to receive a second non-access stratum message.

The processing unit 82 is further configured to determine, after the receiving unit 81 receives the second non-access stratum message, to cancel using the first unicast transmission path for data transmission.

The sending unit 83 is further configured to send a second indication message to the user plane network element.

The second indication message is used to instruct the user plane network element to cancel replicating the data transmitted on the multicast transmission path to the first unicast transmission path for transmission.

In a feasible implementation, the sending unit 83 is further configured to send a third indication message to the terminal, where the third indication message is used to instruct to start the first unicast transmission path that is used to assist the multicast transmission path in data transmission.

In a specific implementation, the multicast transmission control network element may perform, by using the units included therein, the implementation performed by the multicast transmission control network element in the foregoing embodiments, and details are not described herein again.

FIG. 9 is a schematic structural diagram of an access and mobility management network element according to an embodiment of this application. The access and mobility management network element provided in this embodiment of this application may include:
a receiving unit 91, configured to receive a non-access stratum message of a terminal, where the non-access stratum message of the terminal includes reception quality indication information of data received by the terminal on a multicast transmission path; and
a sending unit 92, configured to send a first non-access stratum message to a multicast transmission control network element.

The first non-access stratum message includes the reception quality indication information, the first non-access stratum message is used to trigger the multicast transmission control network element to determine to start a first unicast transmission path, and the first unicast transmission path is used to assist the multicast transmission path in transmitting data to the terminal.

In a feasible implementation, the non-access stratum message of the terminal includes identification information of the multicast transmission path.

The sending unit 92 is configured to determine the multicast transmission control network element based on the identification information of the multicast transmission path, and send the first non-access stratum message to the multicast transmission control network element.

In a feasible implementation, the receiving unit 91 is further configured to receive identification information of the multicast transmission path sent by the multicast transmission control network element, and obtain a mapping relationship between the identification information of the multicast transmission path and the multicast transmission control network element.

The sending unit 92 is configured to determine, based on the identification information of the multicast transmission path carried in the non-access stratum message of the terminal and the mapping relationship, the multicast transmission control network element corresponding to the identification information of the multicast transmission path, and send the first non-access stratum message to the multicast transmission control network element.

In a feasible implementation, the non-access stratum message of the terminal includes identification information of the multicast transmission path.

The sending unit 92 is configured to determine the multicast transmission control network element based on an identity of the multicast transmission control network element carried in the identification information of the multicast transmission path, and send the first non-access stratum message to the multicast transmission control network element.

In a feasible implementation, the sending unit 92 is further configured to send a second non-access stratum message to the multicast transmission control network element, where the second non-access stratum message is used to trigger the multicast transmission control network element to determine to cancel using the first unicast transmission path for data transmission.

In a specific implementation, the access and mobility management network element may perform, by using the units included therein, the implementation performed by the access and mobility management network element in the foregoing embodiments, and details are not described herein again.

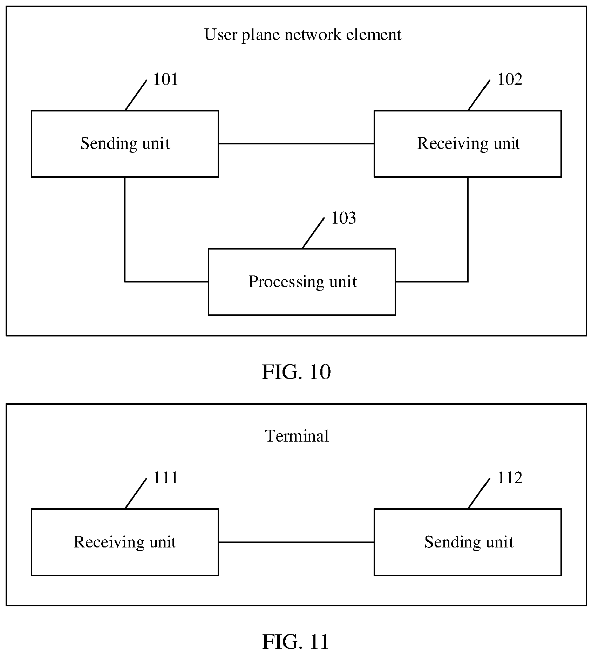

FIG. 10 is a schematic structural diagram of a user plane network element according to an embodiment of this application. The user plane network element provided in this embodiment of this application may include:
a sending unit 101, configured to send data to a terminal on a multicast transmission path;
a receiving unit 102, configured to receive, from a multicast transmission control network element, first indication information used to instruct to start a unicast transmission path; and
a processing unit 103, configured to determine a first unicast transmission path when the receiving unit 102 receives the first indication information.

The sending unit 101 is further configured to replicate, after the processing unit determines the first unicast transmission path, the data transmitted on the multicast transmission path to the first unicast transmission path, and send the data on the first unicast transmission path to the terminal.

In a feasible implementation, the first indication message includes first identification information of the first unicast transmission path and second identification information of the multicast transmission path.

The processing unit 103 is configured to determine the first unicast transmission path based on the first identification information.

The sending unit 101 is configured to replicate data that is transmitted on the multicast transmission path identified by the second identification information to the first unicast transmission path determined by the processing unit 103, and send the data on the first unicast transmission path to the terminal.

In a feasible implementation, the first indication message includes activation information of the first unicast transmission path, first identification information of the first unicast transmission path, and second identification information of the multicast transmission path.

The processing unit 103 is configured to determine the first unicast transmission path based on the first identification information, and activates the first unicast transmission path.

The sending unit 101 is configured to replicate data that is transmitted on the multicast transmission path identified by the second identification information to the first unicast transmission path, and send the data on the first unicast transmission path to the terminal.

In a feasible implementation, the first indication message includes creation information of the first unicast transmission path and second identification information of the multicast transmission path.

The processing unit 103 is configured to create the first unicast transmission path.

The sending unit 101 is configured to replicate data that is transmitted on the multicast transmission path identified by the second identification information to the first unicast transmission path, and send the data on the first unicast transmission path to the terminal.

In a feasible implementation, the receiving unit 102 is further configured to receive a second indication message from the multicast transmission control network element.

The processing unit 103 is further configured to cancel, based on the second indication message received by the receiving unit 102, replicating the data transmitted on the multicast transmission path to the first unicast transmission path for transmission.

In a specific implementation, the user plane network element may perform, by using the units included therein, the implementation performed by the user plane network element in the foregoing embodiments, and details are not described herein again.

FIG. 11 is a schematic structural diagram of a terminal according to an embodiment of this application. The terminal provided in this embodiment of this application may include:
a receiving unit 111, configured to receive data sent by a user plane network element on a multicast transmission path; and
a sending unit 112, configured to send a first non-access stratum message to an access and mobility management network element, where the first non-access stratum message includes reception quality indication information of data received by the receiving unit 111 on the multicast transmission path, and the first non-access stratum message is used to trigger to start a unicast transmission path for data transmission.

The receiving unit 111 is further configured to receive indication information used to instruct to start a first unicast transmission path, and receive data transmitted on the first unicast transmission path.

The data transmitted on the first unicast transmission path is the same as the data transmitted on the multicast transmission path.

In a feasible implementation, the receiving unit 111 is further configured to receive reception indication information of multicast data from an access network apparatus, and the reception indication information includes identification information of the multicast transmission path and/or identification information of a multicast transmission control network element.

The receiving unit 11 is further configured to monitor the data transmitted on the multicast transmission path.

In a feasible implementation, the sending unit 112 is further configured to send a second non-access stratum message to the access and mobility management network element.

The second non-access stratum message is used to trigger to cancel using the first unicast transmission path for data transmission.

In a feasible implementation, the first non-access stratum message and/or the second non-access stratum message include or includes identification information of the multicast transmission path and/or identification information of a multicast transmission control network element.

In a specific implementation, the terminal may perform, by using the units included therein, the implementation performed by the terminal in the foregoing embodiments, and details are not described herein again.

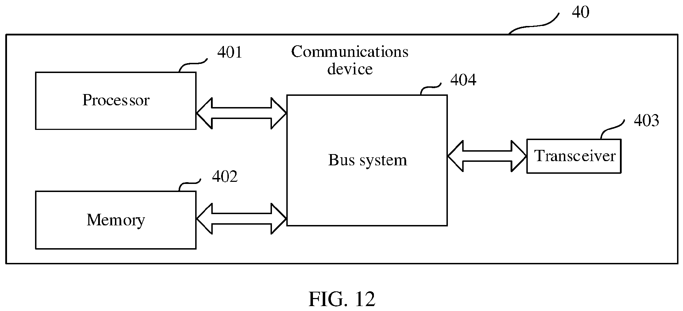

FIG. 12 is a schematic structural diagram of a communications device 40 according to an embodiment of this application. As shown in FIG. 12, the communications device 40 provided in this embodiment of this application includes a processor 401, a memory 402, a transceiver 403, and a bus system 404. The processor 401, the memory 402, and the transceiver 403 are connected through the bus system 404.

The memory 402 is configured to store a program. Specifically, the program may include program code. The program code includes a computer operation instruction. The memory 402 includes, but is not limited to, a random access memory (random access memory, RAM), a read-only memory (read-only memory, ROM), an erasable programmable read-only memory (erasable programmable read only memory, EPROM), or a compact disc read-only memory (compact disc read-only memory, CD-ROM). FIG. 12 shows only one memory. Certainly, it may be set that there are a plurality of memories based on needs. The memory 402 may alternatively be a memory in the processor 401. This is not limited herein.

The memory 402 stores an executable module or a data structure, or a subset or an extended set of an executable module or a data structure, and the following elements:

Operation instruction: including various operation instructions, used to implement various operations.

Operating system: including various system programs, used to implement various fundamental services and process hardware-based tasks.

The processor 401 controls an operation of the communications device 40, and the processor 401 may be one or more central processing units (central processing unit, CPU). In a case in which the processor 401 is a CPU, the CPU may be a single-core CPU or may be a multi-core CPU.

During specific application, components of the communications device 40 are coupled together by the bus system 404. In addition to a data bus, the bus system 404 may further include a power bus, a control bus, a status signal bus, and the like. However, for clear description, various types of buses in FIG. 12 are marked as the bus system 404. For ease of description, the bus system 404 is merely schematically drawn in FIG. 12.

The data transmission method disclosed in the foregoing embodiments provided in the embodiments of this application may be applied to the processor 401 or may be implemented by the processor 401. The processor 401 may be an integrated circuit chip and have a signal processing capability. In an implementation process, the steps of the foregoing method may be implemented by an integrated logic circuit of hardware or an instruction in a software form in the processor 401. The processor 401 may be a general purpose processor, a digital signal processor (digital signal processing, DSP), an application-specific integrated circuit (application specific integrated circuit, ASIC), a field-programmable gate array (field-programmable gate array, FPGA) or another programmable logic device, a discrete gate or a transistor logic device, or a discrete hardware component. The processor may implement or execute the methods, steps, and logical block diagrams disclosed in the embodiments of this application. The general purpose processor may be a microprocessor. Alternatively, the processor may be any conventional processor or the like. Steps of the methods disclosed with reference to the embodiments of this application may be directly executed and accomplished by a hardware decoding processor, or may be executed and accomplished by using a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in the memory 402. The processor 401 reads information in the memory 402 and performs, in combination with hardware of the processor, the steps of the data transmission method described in the foregoing embodiments.

A person of ordinary skill in the art may understand that all or some of the processes of the methods in the foregoing embodiments may be implemented by a computer program instructing relevant hardware. The program may be stored in a computer-readable storage medium. When the program runs, the procedures in the foregoing method embodiments may be performed. The foregoing storage medium includes: any medium that can store program code, such as a ROM, a random access memory RAM, a magnetic disk, or an optical disc.

## Claims

1. A data transmission method, comprising:
receiving, by a multicast transmission control network element, a first non-access stratum message, wherein the first non-access stratum message comprises reception quality indication information of data received by a terminal on a multicast transmission path;
determining, by the multicast transmission control network element after receiving the reception quality indication information, to start a unicast transmission path; and
sending, by the multicast transmission control network element, a first indication message to a user plane network element, wherein the first indication message is used to instruct to start a first unicast transmission path, and the first unicast transmission path is used to assist the multicast transmission path in transmitting data to the terminal.

2. The method according to claim 1, wherein the first indication message comprises first identification information of the first unicast transmission path and/or second identification information of the multicast transmission path; and
the first identification information and/or the second identification information are or is used to instruct the user plane network element to replicate the data transmitted on the multicast transmission path to the first unicast transmission path for transmission.

3. The method according to claim 1 or 2, wherein the multicast transmission path comprises a multicast transmission bearer and/or a multicast transmission session; and
the first unicast transmission path comprises a unicast transmission bearer and/or a unicast transmission session.

4. The method according to any one of claims 1 to 3, wherein before the receiving, by a multicast transmission control network element, a first non-access stratum message, the method further comprises:
activating, by the multicast transmission control network element, the multicast transmission path, and sending identification information of the multicast transmission path to an access and mobility management network element.

5. The method according to any one of claims 1 to 4, wherein the method further comprises:
determining, by the multicast transmission control network element after receiving a second non-access stratum message, to cancel using the first unicast transmission path for data transmission; and
sending, by the multicast transmission control network element, a second indication message to the user plane network element, wherein
the second indication message is used to instruct the user plane network element to cancel replicating the data transmitted on the multicast transmission path to the first unicast transmission path for transmission.

6. The method according to any one of claims 1 to 4, wherein the method further comprises:
sending, by the multicast transmission control network element, a third indication message to the terminal, wherein the third indication message is used to instruct to start the first unicast transmission path that is used to assist the multicast transmission path in data transmission.

7. A data transmission method, comprising:
receiving, by an access and mobility management network element, a non-access stratum message of a terminal, wherein the non-access stratum message of the terminal comprises reception quality indication information of data received by the terminal on a multicast transmission path; and
sending, by the access and mobility management network element, a first non-access stratum message to a multicast transmission control network element, wherein
the first non-access stratum message comprises the reception quality indication information, the first non-access stratum message is used to trigger the multicast transmission control network element to determine to start a first unicast transmission path, and the first unicast transmission path is used to assist the multicast transmission path in transmitting data to the terminal.

8. The method according to claim 7, wherein the non-access stratum message of the terminal comprises identification information of the multicast transmission path; and
the sending, by the access and mobility management network element, a first non-access stratum message to a multicast transmission control network element comprises:
determining, by the access and mobility management network element, the multicast transmission control network element based on the identification information of the multicast transmission path, and sending the first non-access stratum message to the multicast transmission control network element.

9. The method according to claim 7, wherein before the receiving, by an access and mobility management network element, a non-access stratum message of a terminal, the method further comprises:
receiving, by the access and mobility management network element, identification information of the multicast transmission path sent by the multicast transmission control network element, and obtaining a mapping relationship between the identification information of the multicast transmission path and the multicast transmission control network element; and
the sending, by the access and mobility management network element, a first non-access stratum message to a multicast transmission control network element comprises:
determining, by the access and mobility management network element based on the identification information of the multicast transmission path carried in the non-access stratum message of the terminal and the mapping relationship, the multicast transmission control network element corresponding to the identification information of the multicast transmission path, and sending the first non-access stratum message to the multicast transmission control network element.

10. The method according to claim 7, wherein the non-access stratum message of the terminal comprises identification information of the multicast transmission path; and
the sending, by the access and mobility management network element, a first non-access stratum message to a multicast transmission control network element comprises:
determining, by the access and mobility management network element, the multicast transmission control network element based on an identity of the multicast transmission control network element carried in the identification information of the multicast transmission path, and sending the first non-access stratum message to the multicast transmission control network element.

11. The method according to any one of claims 7 to 10, wherein the method further comprises:
sending, by the access and mobility management network element, a second non-access stratum message to the multicast transmission control network element, wherein the second non-access stratum message is used to trigger the multicast transmission control network element to determine to cancel using the first unicast transmission path for data transmission.

12. A multicast transmission control network element, comprising:
a receiving unit, configured to receive a first non-access stratum message, wherein the first non-access stratum message comprises reception quality indication information of data received by a terminal on a multicast transmission path;
a processing unit, configured to determine, after the receiving unit receives the reception quality indication information, to start a unicast transmission path; and
a sending unit, configured to send, after the processing unit determines to start the unicast transmission path, a first indication message to a user plane network element, wherein the first indication message is used to instruct to start a first unicast transmission path, and the first unicast transmission path is used to assist the multicast transmission path in transmitting data to the terminal.

13. The multicast transmission control network element according to claim 12, wherein the first indication message comprises first identification information of the first unicast transmission path and/or second identification information of the multicast transmission path; and
the first identification information and/or the second identification information are or is used to instruct the user plane network element to replicate the data transmitted on the multicast transmission path to the first unicast transmission path for transmission.

14. The multicast transmission control network element according to claim 12 or 13, wherein the multicast transmission path comprises a multicast transmission bearer and/or a multicast transmission session; and
the first unicast transmission path comprises a unicast transmission bearer and/or a unicast transmission session.

15. The multicast transmission control network element according to any one of claims 12 to 14, wherein
the processing unit is further configured to activate the multicast transmission path; and
the sending unit is further configured to send identification information of the multicast transmission path to an access and mobility management network element after the processing unit activates the multicast transmission path.

16. The multicast transmission control network element according to any one of claims 12 to 15, wherein
the receiving unit is further configured to receive a second non-access stratum message;
the processing unit is further configured to determine, after the receiving unit receives the second non-access stratum message, to cancel using the first unicast transmission path for data transmission; and
the sending unit is further configured to send a second indication message to the user plane network element, wherein
the second indication message is used to instruct the user plane network element to cancel replicating the data transmitted on the multicast transmission path to the first unicast transmission path for transmission.

17. The multicast transmission control network element according to any one of claims 12 to 15, wherein
the sending unit is further configured to send a third indication message to the terminal, wherein the third indication message is used to instruct to start the first unicast transmission path that is used to assist the multicast transmission path in data transmission.

18. An access and mobility management network element, comprising:
a receiving unit, configured to receive a non-access stratum message of a terminal, wherein the non-access stratum message of the terminal comprises reception quality indication information of data received by the terminal on a multicast transmission path; and
a sending unit, configured to send a first non-access stratum message to a multicast transmission control network element, wherein
the first non-access stratum message comprises the reception quality indication information, the first non-access stratum message is used to trigger the multicast transmission control network element to determine to start a first unicast transmission path, and the first unicast transmission path is used to assist the multicast transmission path in transmitting data to the terminal.

19. The access and mobility management network element according to claim 18, wherein the non-access stratum message of the terminal comprises identification information of the multicast transmission path; and
the sending unit is configured to determine the multicast transmission control network element based on the identification information of the multicast transmission path, and send the first non-access stratum message to the multicast transmission control network element.

20. The access and mobility management network element according to claim 18, wherein
the receiving unit is further configured to receive identification information of the multicast transmission path sent by the multicast transmission control network element, and obtain a mapping relationship between the identification information of the multicast transmission path and the multicast transmission control network element; and
the sending unit is configured to determine, based on the identification information of the multicast transmission path carried in the non-access stratum message of the terminal received by the receiving unit and the mapping relationship, the multicast transmission control network element corresponding to the identification information of the multicast transmission path, and send the first non-access stratum message to the multicast transmission control network element.

21. The access and mobility management network element according to claim 18, wherein the non-access stratum message of the terminal comprises identification information of the multicast transmission path; and
the sending unit is configured to determine the multicast transmission control network element based on an identity of the multicast transmission control network element carried in the identification information of the multicast transmission path, and send the first non-access stratum message to the multicast transmission control network element.

22. The access and mobility management network element according to any one of claims 18 to 21, wherein
the sending unit is further configured to send a second non-access stratum message to the multicast transmission control network element, wherein the second non-access stratum message is used to trigger the multicast transmission control network element to determine to cancel using the first unicast transmission path for data transmission.
